# EUROPEAN PATENT APPLICATION

(11) **EP 0 647 790 A1**
(43) Date of publication of application: **12.04.1995**
(21) Application number: 94305732.3
(22) Date of filing: 02.08.1994
(51) Int. Cl.: F16D 3/84

(54) **Protective bellows**

(30) Priority: 12.10.1993 GB 9321001
(71) Applicant: DRAFTEX INDUSTRIES LIMITED, Edinburgh EH3 6YY, Scotland (GB)
(72) Inventor: Lescroart, Vianney, F-44000 Nantes (FR); Marhic, Bernard, F-44115 Basse Goulaine (FR)
(74) Representative: Foster, David Martyn

(57) **Abstract**

A protective bellows has bellows turns (10A) each with a peak (16A) where faces (19A,20A) of the material of the bellows integrally meet. Each bellows turn (10A) is joined to the next bellows turn (10A) by a trough (18A). The face (20A) of each bellows turn (10A) which joins that turn to the next turn (10A) nearer to the larger diameter end (11) of the bellows is arranged to be almost coaxial with the bellows. Preferably, the diameter across the bellows at the peak of each turn is not more than 15% greater than the diameter across the bellows at the trough between that bellows turn and the next bellows turn nearer the larger diameter end (11) of the bellows. This configuration enables the bellows to be produced from thermoplastic material by injection moulding instead of blow-moulding. The particular configuration of the bellows turns ensures that the bellows can be removed from the injection mould with the minimum of stretching and without deformation.

## Description

### BACKGROUND OF THE INVENTION

The invention relates to protective bellows. A bellows embodying the invention and to be described below by way of example is for protecting universal joints such as used in the transmission of front wheel drive motor vehicles.

### BRIEF DESCRIPTION OF THE INVENTION

According to the invention, there is provided a bellows made from thermoplastic material by injection moulding, comprising a plurality of bellows turns on a conical generatrix, the peak of each bellows turn being defined by two faces of the thermoplastic material which meet at that peak, the diameter across the bellows at the peak of each bellows turn being not more than 15% greater than the diameter across the bellows at the trough which joins that bellows turn to the next bellows turn closer to the larger diameter end of the bellows.

According to the invention, there is also provided a protective bellows made from thermoplastic material by injection moulding, comprising a plurality of bellows turns arranged on a conical generatrix, each turn of the bellows having a peak defined by two relatively inclined faces of the material which integrally meet at the peak and each bellows turn being joined to the next bellows turn by a trough in the material, the face of each bellows turn which joins its peak to the trough between that turn and the next bellows turn nearer the larger diameter end of the bellows being almost co-axial with the bellows.

### DESCRIPTION OF DRAWINGS

Protective bellows made from thermoplastic material and embodying the invention will now be described, by way of example only, with reference to the accompanying diagrammatic drawings in which:
Figure 1 is a half-view in elevation of a prior art bellows produced by blow-moulding;
Figure 2 is a half-cross-section through the bellows of Figure 1;
Figure 3 is a detailed view of part of some bellows turns of the bellows of Figures 1 and 2;
Figure 4 corresponds to Figure 1 but shows a bellows embodying the invention;
Figure 5 corresponds to Figure 2 but relates to the bellows of Figure 4;
Figure 6 is a detailed view of some of the turns of the bellows of Figures 4 and 5; and
Figure 7 corresponds to Figure 6 but shows a modified design.

### DESCRIPTION OF PREFERRED EMBODIMENT

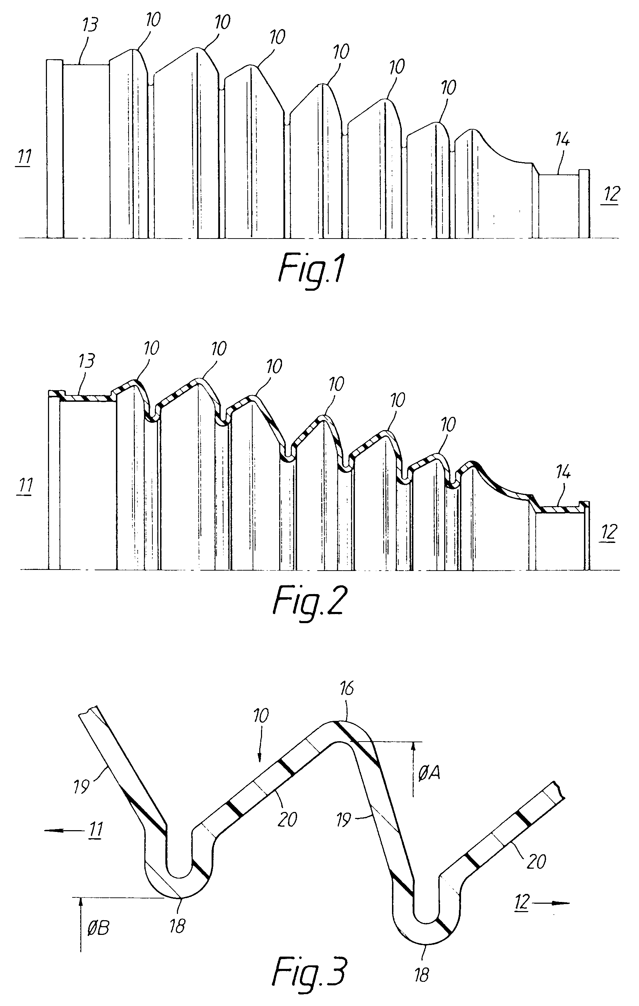

The bellows of Figures 1 and 2 comprises a plurality of bellows turns 10 arranged around a shallow conical generatrix and extending between a larger diameter end 11 and a smaller diameter end 12. The bellows ends 11 and 12 are respectively provided with end collars 13 and 14 by means of which the bellows is fixed in position in use. As shown in Figures 1 and 2, and more clearly in Figure 3, the faces 19 and 20 of the bellows immediately adjacent each peak 16 and trough 18 are relatively steeply sloped, and there is a significant dimensional difference between the diameter A measured in the plane of the peak 16 of one of the turns 10 and the diameter B measured in the plane of the trough 18 of the next turn 10 nearer to the larger diameter end 11 of the bellows. A bellows of this form, that is, as shown in Figures 1,2 and 3, can be made by blow moulding but cannot satisfactorily be made by injection moulding. This is because the thermoplastic material of the bellows has a relatively low permissible amount of elastic elongation, less than 15%; elongation greater than this results in deformation and possible damage. If a bellows of the form shown in Figures 1,2 and 3 is injection-moulded, it is thus difficult to extract it from the mould. This is because the relatively steeply inclined sides of the bellows adjacent the peaks and troughs necessitate stretching of the material during the process of extracting the bellows from the correspondingly shaped wall of the mould.

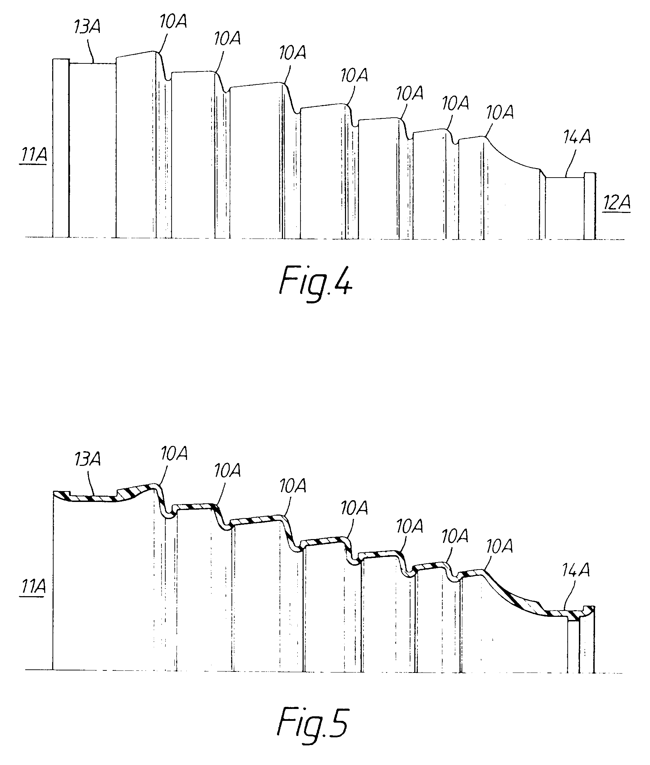

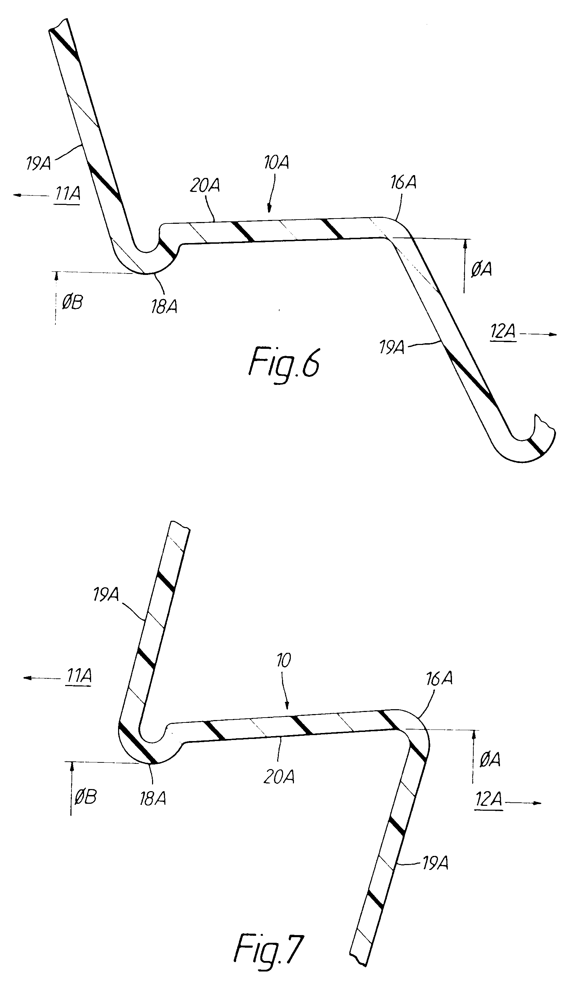

Figures 4 and 5 correspond to Figures 1 and 2 and show a modified form of the bellows of Figures 1 and 2 in which corresponding items are similarly referenced but with the addition of the suffix A. As is apparent from Figures 4 and 5, and more particularly from Figure 6, the two faces 19A of the bellows material which meet at each peak 16A are substantially asymmetrically arranged. One of these surfaces 19A (Fig. 6) is relatively steeply inclined, while the other of the surfaces 20A is almost flat, that is, parallel to the axis of the bellows. Thus, each bellows turn 10A has a relatively steep front face 19A (that is, the face presenting towards the small diameter end 12 of the bellows) which leads to the peak 16A of that turn, and a relatively flat face 20A leading away from the peak 16A towards the trough 18A between that turn and the next turn nearer the larger diameter end 11 of the bellows. This modified configuration of the faces 19A,20A forming each bellows turn has the effect that the moulded bellows can be removed from the mould, after the injection moulding process, with only a very small amount of stretching of the material. This is because the substantially co-axial faces 20A of each bellows turn are matched by correspondingly shaped wall portions within the mould, and the moulded article can therefore be removed from the mould without substantial deformation.

It is found that if the diameter A at the peak 16A of each bellows turn 10A (Fig. 5) is not more than 15% greater than the diameter B at the trough 18A joining that turn to the next turn 10A nearer to the larger diameter end 11 of the bellows, the bellows can be removed from the injection mould easily and without damage, and the bellows is thus suitable for manufacture by injection moulding. It is more satisfactory to use injection moulding for producing bellows made of thermoplastic material because injection moulding generally gives better results; blow moulding is relatively costly and does not give the best quality product because of the difficulty of controlling material thickness.

Figure 7 corresponds to Figure 6 and items in Figure 7 corresponding to those in Figure 6 are similarly referenced. Figure 7 shows an alternative configuration for each bellows turn. Again, however the diameter A is not more than 15% greater than the diameter B.

## Claims

1. A bellows made from thermoplastic material by injection moulding, comprising a plurality of bellows turns (10; 10A) on a conical generatrix, the peak (16; 16A) of each bellows turn (10; 10A) being defined by two faces (19,20; 19A,20A) of the thermoplastic material which meet at that peak (16; 16A), characterized in that the diameter (A) across the bellows at the peak (16; 16A) of each bellows turn (10; 10A) being not more than 15% greater than the diameter (B) across the bellows at the trough (18; 18A) which joins that bellows turn (10; 10A) to the next bellows turn closer to the larger diameter end (11) of the bellows, whereby to minimise stretching of the material upon removal of the bellows from the injection mould.

2. A protective bellows made from thermoplastic material by injection moulding, comprising a plurality of bellows turns (10A) arranged on a conical generatrix, each turn (10A) of the bellows having a peak (16A) defined by two relatively inclined faces (19A,20A) of the material which integrally meet at the peak (16A), and each bellows turn (10A) being joined to the next bellows turn by a trough (18A) in the material, characterized in that the face (20A) of each bellows turn (20A) which joins its peak (16A) to the trough (18A) between that turn and the next bellows turn nearer the larger diameter end (11A) of the bellows being almost co-axial with the bellows, whereby to minimise stretching of the material upon removal of the bellows from the injection mould.
